# EUROPEAN PATENT APPLICATION

(11) **EP 1 335 521 A2**
(43) Date of publication of application: **13.08.2003**
(21) Application number: 02023847.3
(22) Date of filing: 24.10.2002
(51) Int. Cl.: H04L 12/18

(54) **Method and device for managing multicast groups**

(30) Priority: 08.02.2002 US 71321
(71) Applicant: ALCATEL, 75008 Paris (FR)
(72) Inventor: Keller-Tuberg, Stefan, Raleigh, NC 27612 (US)
(74) Representative: Dreiss, Fuhlendorf, Steimle & Becker

(57) **Abstract**

One embodiment of the disclosures made herein is a method for facilitating a multicast group switch via a single Internet Group Management Protocol message. In accordance with such method, an operation is performed for receiving multicast information associated with a first multicast group and an operation is performed for receiving a request for receiving multicast information associated with a second multicast group. In response to receiving the request, an operation is performed for preparing an Internet Group Management Protocol (IGMP) Group Switch message. The IGMP Group Switch message designates an identity of the first multicast group and an identity of the second multicast group. After preparing the IGMP Group Switch message, an operation is performed for transmitting the IGMP Group Switch message for reception by a multicast-capable system.

## Description

### FIELD OF THE DISCLOSURE

The disclosures made herein relate generally to communication protocols and more particularly to facilitating a multicast group switch via a single Internet Group Management Protocol message.

### BACKGROUND

The Internet Group Management Protocol (IGMP) is described in Request For Comments document No. 1112 (hereinafter referred to as RFC-1112) and in Request For Comments document No. 2236 (hereinafter referred to as RFC-2236). Through the use of various IGMP messages, a requesting system (i.e. an end user download device) is able to facilitate joining and leaving one or more multicast groups. Thus, the requesting system device may selectively receive one or more streams of multicast information.

Conventional implementations of IGMP require that a requesting system (e.g. an end user download device) transmit two IGMP messages for an end user to switch from a first multicast group to a second multicast group. First, the requesting system transmits an IGMP Leave Group message for initiating removal of the requesting system from the first multicast group. Then, the requesting system transmits an IGMP Membership Report message for initiating membership in the second multicast group. IGMP controlled streaming video and streaming radio services are examples of classes of applications that would be frequently expected to issue correlated Leave Group and Membership Report messages.

Accordingly, conventional implementations of IGMP require that two separate IGMP messages be processed for what amounts to effectively a single event of switching from one multicast group to another multicast group. Such requirement of processing two separate IGMP messages results in an associated network node having to process twice as many events as there are effective events (i.e. switching from one multicast group to another multicast group is effectively one event). Processing two separate IGMP messages for switching from one multicast group to another multicast group undesirably requires more processing, thus lowering network performance and increasing latency.

Network nodes are often connection oriented, such as when IGMP multicast services are being distributed using ATM point-to-multipoint techniques. In such situations, the network node generally processes messages in a sequential manner. Processing IGMP messages in a sequential manner (i.e. a first come-first served basis) limits the effectiveness and versatility of a network node.

In a conventional implementation of IGMP that does not benefit from a combined Leave Group and Membership Report message, it may be desirable for a network node to attempt to logically combine IGMP Membership Report and Leave Group messages. For example an attempt to logically combine IGMP Membership Report and Leave Group messages may be implemented when the network node internally uses connection oriented techniques for distributing traffic and is using the IGMP protocol to predominantly support applications that produce naturally correlated Leave Group and Membership Report events. Logically combining the events may reduce the number of internal connection reconfigurations required in such nodes by avoiding the need to free the system resources associated with removing and recreating connections to the same end points. An Asynchronous Transfer Mode Digital Subscriber Line Access Multiplexer (ATM DSLAM) carrying streaming video services would be one such type of network node that could benefit from logically combining Membership Report and Leave Group messages.

With respect to conventional implementations of IGMP, achieving logical association of a Leave Group and Membership Report messages would require that a network node keep state and establish software timers each time an IGMP Leave Group message is received. In this manner, the network node would be able to detect related membership and leave events and to then collapse them into a single event. However, such an implementation for detecting related membership and leave events and then collapsing them into a single event is complex and may require considerable processing and memory resources, particularly in a network node that is supporting thousands of end user interface apparatuses.

Therefore, facilitating a multicast group switch via a single Internet Group Management Protocol message in a manner that overcomes limitations associated with conventional implementations of IGMP is useful.

### BRIEF DESCRIPTION OF THE DRAWINGS

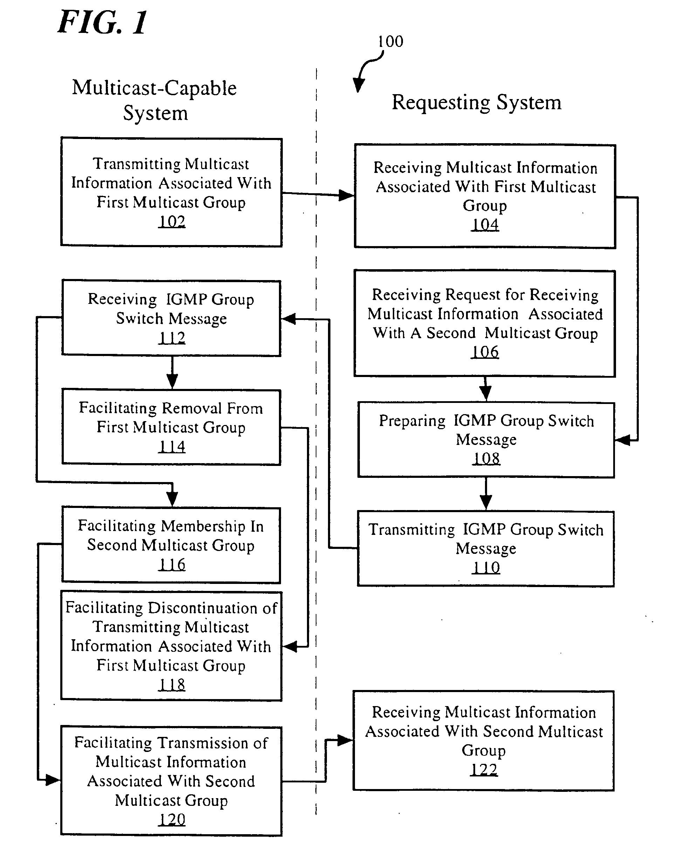

FIG. 1 is a flow chart view depicting a method for facilitating a multicast group switch via a single Internet Group Management Protocol message, wherein the method is in accordance with an embodiment of the disclosures made herein.

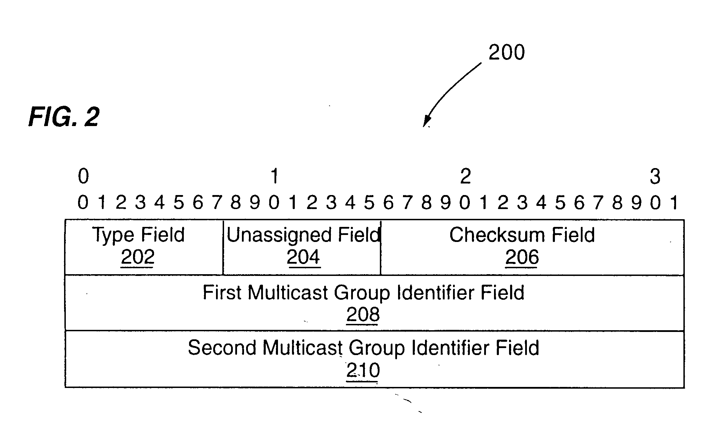

FIG. 2 is a diagrammatic view depicting a first embodiment of an Internet Group Management Protocol Group Switch message in accordance with the disclosures made herein, wherein the message is capable of designating one newly requested multicast group and one discontinued multicast group.

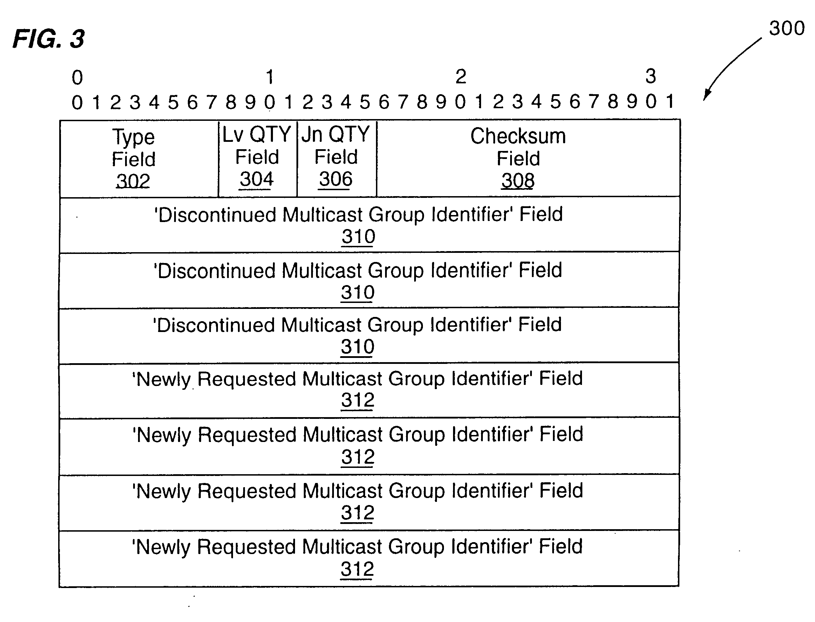

FIG. 3 is a diagrammatic view depicting a second embodiment of an Internet Group Management Protocol Group Switch message in accordance with the disclosures made herein, wherein the message is capable of designating one or more newly requested multicast groups and/or one or more discontinued multicast groups and explicitly informing of the network nodes of such one or more newly requested multicast groups and/or one or more discontinued multicast groups.

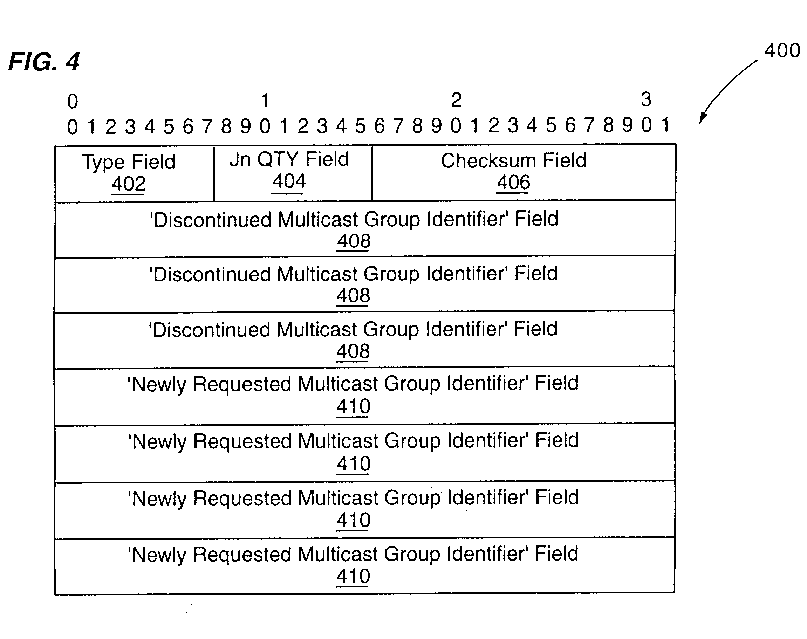

FIG. 4 is a diagrammatic view depicting a third embodiment of an Internet Group Management Protocol Group Switch message in accordance with the disclosures made herein wherein the message is capable of designating one or more newly requested multicast groups and/or one or more discontinued multicast groups and inferentially informing of the network nodes of such one or more newly requested multicast groups and/or one or more discontinued multicast groups.

### DETAILED DESCRIPTION OF THE FIGURES

The disclosures made herein relate to various aspects of facilitating a multicast group switch via a single Internet Group Management Protocol (IGMP) message. The functionalities associated with an IGMP Membership Report message and an IGMP Leave Group message are integrated into a single IGMP message. Such a single IGMP message is hereinafter referred to an IGMP Group Switch message.

The term "switch" as used herein with respect to the context of the IGMP Group Switching message relates to changing immediately from one multicast group to a different multicast group. This is in contrast to leaving one multicast group and then at some point in the future joining a different multicast group. Accordingly, it should be understood that conventional IGMP Leave Group and Membership Report messages would continue to be used in other (i.e. non-switching) instances. For example, a conventional IGMP Membership Report message would be sent in response to a group specific or a regular query.

The IGMP Group Switch message is a newly defined IGMP message that simplifies switching between multicast groups. When a multicast service subscriber chooses to leave one multicast group and then join a different multicast group, the multicast service subscriber causes a respective requesting system to send an IGMP Group Switch message rather than two messages previously required for switching multicast groups. Accordingly, the actions required of the service subscriber are simplified and fewer.

Furthermore, the IGMP Group Switch message improves network resource utilization. The processing of an IGMP Group Switching message reduces network processing requirements, even though the IGMP Group Switch message provides functionality conventionally associated with both IGMP Membership Report messages and IGMP Leave Group messages. Such reduced network processing requirements at least partially stem from duplicated operations being eliminated. For example, rather than receiving and interpreting two separate messages, only a single message (i.e. the IGMP Group Switch message) needs to be received and interpreted. Through an explicit correlation of the leave group and membership report functionality in the Group Switch message, the network processing associated with releasing and reclaiming of some resources can be avoided. Accordingly, the IGMP Group Switching message contributes to a higher level of network performance and reduced time to perform a requested switch.

Turning now to the figures, a method 100 for facilitating a multicast group switch via an IGMP Group Switch message in accordance with an embodiment of the disclosures made herein is depicted in FIG. 1. The method 100 begins with a multicast-capable system performing an operation 102 for transmitting multicast information associated with a first multicast group for reception by a requesting system. Accordingly, the requesting system performs an operation 104 for receiving the multicast information associated with the first multicast group.

Examples of the multicast-capable system include "IP routers", "IP forwarders" and "IP switches" and similar systems normally used to route Internet Protocol traffic. Examples of requesting systems include an information subscriber interface system (e.g. a set-top box capable of displaying audio-visual information), a network node that interacts with an Internet Protocol network, and other suitable IGMP compatible systems. It is contemplated herein that the requesting system may comprise a first device capable of preparing an IGMP group membership request (e.g. a requesting system) and a second device capable of interpreting the multicast information (e.g. an MPEG decoder/display, an MP3 decoder/playback system, a storage device or any other system that could process/use information which is multicast in nature).

At some point in time after the requesting system begins receiving the multicast information associated with the first multicast group and while still receiving multicast information associated with the first multicast group, the requesting system performs an operation 106 for receiving a request for receiving multicast information associated with a second multicast group (i.e. a newly requested multicast group) and discontinuing reception of multicast information associated with the first multicast group (i.e. a discontinued multicast group). It is contemplated herein that the request for receiving multicast information associated with the second multicast group may include an identity of one or more discontinued multicast groups (e.g. the first multicast group). In one embodiment, a service subscriber using a keypad of the requesting system submits such request. In another embodiment, such request is received from a peripheral system, such as a remote network element or a different requesting system.

Capacity of the multicast-capable system for processing multicast streams is often limited either by the maximum number of multicast streams which can be simultaneously received or the maximum network capacity required to deliver the requested multicast streams to the system. Therefore, it may reach a state in which this limit has been reached, even though membership in an additional multicast group is required. In such an instance and in accordance with the disclosures made herein, the requesting system performs an operation 108 for preparing an IGMP Group Switch message for initiating removal from the first multicast group and initiating membership in the second multicast group.

Once prepared, the requesting system performs an operation 110 for transmitting the IGMP Group Switch message for reception by the multicast-capable system. Accordingly, the multicast-capable system performs an operation 112 for receiving the IGMP Group Switch message. Because the IGMP Group Switch message is capable of enabling functionalities conventionally enabled by both an IGMP Membership Report message and an IGMP Leave Group message, network resource utilization is improved by virtue of a single IGMP message (i.e. the IGMP Group Switch message) providing such functionality.

In response to receiving the IGMP Group Switch message, the multicast-capable system performs an operation 114 for facilitating removal from the first multicast group and an operation 116 for facilitating membership in the second multicast group. As discussed below in reference to FIG. 2 in greater detail, an IGMP Group Switch message in accordance with an embodiment of the disclosures made herein has a first multicast group identifier and a second multicast group identifier designated therein. The first multicast group identifier and the second multicast group identifier are utilized by the multicast-capable system for facilitating removal from the first multicast group and membership in the second multicast group, respectively.

It is contemplated herein that the first multicast group identifier may be transmitted along with the multicast information associated with first multicast group. For example, the first multicast group identifier may be embedded within a multicast content file comprising the multicast information associated with the first multicast group. It is further contemplated herein that the first multicast group identifier may be stored on the requesting system in response to requesting reception of said multicast information associated with the first multicast group and retrieved therefrom in response to preparing the IGMP Group Switch message. Examples of the first multicast group identifier and the second multicast group identifier include a respective network address, a respective title of a particular multicast group, a respective title of multicast information associated with a particular multicast group, and the like.

In response to performing the operation 114 for facilitating removal from the first multicast group, the multicast-capable system performs an operation 118 for facilitating discontinuation of transmitting multicast information associated with the first multicast group for reception by the requesting system. In response to performing the operation 116 for facilitating membership in the second multicast group, the multicast-capable system performs an operation 120 for facilitating transmission of multicast routing information associated with the second multicast group for reception by the requesting system. Accordingly, the requesting system performs an operation 122 for receiving the multicast information associated with the second multicast group. Consistent with the term "switch" as referred to herein with respect to the IGMP Group switch message, the operation 118 for facilitating discontinuation of transmitting multicast information associated with the first multicast group for reception by the requesting system and the operation 120 for facilitating transmission of multicast routing information associated with the second multicast group for reception by the requesting system are performed in an automated and dependent manner.

FIG. 2 depicts an IGMP Group Switch message 200 in accordance with an embodiment of the disclosures made herein. The IGMP Group Switch message 200 is depicted in a format similar to the message formats used in RFCs 1112 and 2236. A 'Type' field 202 of the IGMP Group Switch message 200 enables designation of a newly defined value designating that the IGMP message is an IGMP Group Switch message. An 'Unassigned' field 204 replaces a maximum Response Time field as defined in other IGMP messages. A 'Checksum' field 206 mimics counterpart fields. A 'First Multicast Group Identifier' field 208 enables designation of an identifier corresponding to the first multicast group (e.g. the multicast group being switched from). A 'Second Multicast Group Identifier' field 210 enables designation of an identifier corresponding to a second multicast group (e.g. the multicast group being switched to). Performing an operation for preparing an IGMP Group Switch message as disclosed herein includes populating at least a portion of such fields.

The method 100 depicted in FIG. 1 and the IGMP Group Switch message 200 depicted in FIG. 2 are respective embodiments of the disclosures made herein that are capable of facilitating membership into one newly requested multicast group and removal from one discontinued multicast group. However, it is contemplated herein that methods and IGMP Group Switch messages in accordance with embodiments of the disclosures made herein are capable of facilitating requests for joining one or more newly requested multicast groups and for being removed from one or more discontinued multicast groups. In such embodiments, a method for facilitating a multicast group switch via an IGMP Group Switch message would comprise operations for facilitating membership in the one or more newly requested multicast groups and for facilitating removal from the one or more discontinued multicast groups.

For example, a requesting system may be simultaneously is receiving two 1-Mbit/s capacity streams of multicast information. But, at some point in time, it is desired to receive a new stream of between 1 and 2 Mbit/s capacity (i.e. the newly requested multicast group) and the requesting system no longer has the need for receiving the two 1-Mbit/s capacity streams (i.e. the plurality of discontinued multicast groups). Where capacity of the requesting system is limited to a maximum of 2 Mbits/s, an IGMP Group Switch message capable of designating multicast group identifiers for two or more discontinued multicast groups to be removed from and capable of designating at least one newly requested multicast group to be joined with would be prepared by the requesting system and transmitted for reception by a respective multicast-capable system. In this manner, a method would be capable of ceasing membership with the plurality of discontinued multicast groups and implementing membership with the newly requested multicast group.

Similarly, for example, a requesting system is receiving a 2-Mbit/s capacity stream of multicast information associated with one multicast group. But, at some point in time, it is desired to receive new streams of multicast information totaling 2Mbits/s or less that are associated with a plurality of other multicast groups (i.e. the plurality of newly requested multicast groups) and no longer has the need for receiving the 2-Mbit/s capacity stream of multicast information associated with one multicast group (i.e. the discontinued multicast group). Where capacity of the requesting system is limited to a maximum of 2 Mbits/s, an IGMP Group Switch message capable of designating multicast group identifiers for at least one discontinued multicast group to be removed from and capable of designating two or more newly requested multicast groups to be joined with would be prepared by the requesting system and transmitted for reception by a respective multicast-capable system. In this manner, a method would be capable of ceasing membership with the discontinued multicast group and implementing membership with the plurality of newly requested multicast groups.

FIG. 3 depicts an embodiment of an IGMP Group Switch message 300 capable of initiating membership with at least one newly requested multicast group and initiating removal from at least one discontinued multicast group. One distinguishing aspect of the IGMP Group switch message 300 is that it includes separate fields for designating the number of newly requested multicast groups and the number of discontinued multicast groups. Together with a plurality of fields for enabling designation of identifiers of newly requested multicast groups and a plurality of fields for enabling designation of identifiers of discontinued multicast groups, such separate fields for designating the number of newly requested multicast groups and the number of discontinued multicast groups enable the IGMP Group Switch message 300 to initiate membership with at least one newly requested multicast group and to initiate removal from at least one discontinued multicast group.

It should be understood that the IGMP Group Switch message 300 is capable of implementing a request in which nonewly requested multicast groups are designated or no discontinued multicast groups are designated. However, in such case, the IGMP Group switch message is functioning as a special-case IGMP Leave group message or special-case IGMP Membership report message.

As depicted in FIG. 3, the IGMP Group Switch message 300 includes a plurality of fields. A 'Type' field 302 enables designation of a newly defined value designating that the IGMP message is an IGMP Group Switch message. A 'Leave Quantity' field 304 enables designation of a number of multicast groups being requested to be removed from by the IGMP Group Switch message 300. A 'Join Quantity' field 306 enables designation of a number of multicast groups for which membership is being requested by the IGMP Group Switch message 300. A previously "Unassigned" field (e.g. similar to the unassigned field 204 depicted in FIG. 2) comprises both the 'Leave Quantity' field 304 and the 'Join Quantity' field 306. A 'Checksum' field 308 mimics counterpart fields. A plurality of 'Discontinued Multicast Group Identifier' fields 312 enables a variable number of discontinued multicast group identifiers to be designated. A plurality of 'Newly Requested Multicast Group Identifier' fields 312 enables a variable number of discontinued multicast group identifiers to be designated. Populating at least a required portion of such fields of the IGMP Group Switch message in an example of performing an operation for preparing an IGMP Group Switch Message in accordance with an embodiment of the disclosures made herein.

The 'Leave Quantity' field 304 and the 'Join Quantity' field 306 are each 4-bits. Explicitly specifying the number of newly requested multicast groups and the number of discontinued multicast groups provides for a number of benefits. One benefit is that the intent of the message is unambiguous. That is, all systems interpreting the IGMP Group Switch message 300 know what each field in the message means. Another benefit is that the IGMP Group Switch message 300 can be used to initiate leaving one or more groups and/or joining join one or more groups. Yet another benefit is that the length of the IGMP Group Switch message 300 need not be any longer than it has to be, thus conserving network resources.

FIG. 4 depicts an embodiment of an IGMP Group Switch message 400 capable of initiating membership with at least one newly requested multicast group and initiating removal from at least one discontinued multicast group. One distinguishing aspect of the IGMP Group switch message 400 is that it includes a field for designating the number of newly requested multicast groups. Together with a plurality of fields for enabling designation identifiers of newly requested multicast groups and a plurality of fields for enabling designation of identifiers of discontinued multicast groups, such field for designating the number of newly requested multicast groups enable the IGMP Group Switch message 400 to initiate membership with at least one newly requested multicast group and to initiate removal from at least one discontinued multicast group.

As depicted in FIG. 4, the IGMP Group Switch message 400 includes a plurality of fields. A 'Type' field 402 enables designation of a newly defined value designating that the IGMP message is an IGMP Group Switch message. A 'Join Quantity' field 404 enables designation of a number of multicast groups for which membership is being requested by the IGMP Group Switch message 400. A previously "Unassigned" field (similar to the unassigned field 204 depicted in FIG. 2) comprises the 'Join Quantity' field 404. A 'Checksum' field 406 mimics counterpart fields. A plurality of 'Discontinued Multicast Group Identifier' fields 408 enables a variable number of discontinued multicast group identifiers to be designated. A plurality of 'Newly Requested Multicast Group Identifier' fields 410 enables a variable number of discontinued multicast group identifiers to be designated. Populating at least a required portion of such fields of the IGMP Group Switch message in an example of performing an operation for preparing an IGMP Group Switch Message in accordance with an embodiment of the disclosures made herein.

Because the IGMP Group Switch message 400 IGMP messages designates the number of multicast groups to join, but not the number to leave, any number of multicast groups to leave must be inferred. In one embodiment of such inference, the length of the IGMP Group Protocol message 400 is used in combination with the value designated in the 'Join Quantity' field 404 to determine any number of multicast groups to leave. To this end, after the IGMP Group Switch message is transmitted (i.e. over Internet Protocol) for reception by a multicast-capable system, the multicast-capable system interprets an associated IP header to identify a total length of the IGMP Group Protocol message 400 (i.e. the content of the Internet Protocol packet) and interprets the IGMP Group Switch message to identify the value designated in the 'Join Quantity' field 404.

Once the total length of the IGMP Group Switch message and the number of newly requested multicast groups are known, the value of the unknown variable may be calculated. In accordance with conventional IGMP message format, the total length of the IGMP Group Switch message 400 is: 4 bytes x (1 + Join Quantity + Leave Quantity). Accordingly, the number of newly requested multicast groups is: (total message length/4) - (1+M).

It should be understood that the IGMP Group Switch message 400 is capable of implementing a request in which no newly requested multicast groups are designated or no discontinued multicast groups are designated. Furthermore, a message similar to the IGMP Group Switch message 400 is contemplated wherein a field for designating the number of discontinued multicast groups is provided rather than a field for designating the number of newly requested multicast groups. The overall functionality disclosed herein with respect to the IGMP Group Switch message 400 would apply to such an IGMP message having a field for designating the number of discontinued multicast groups rather than a field for designating the number of newly requested multicast groups.

A benefit of the IGMP Group Switch message 400 and equivalent types of IGMP Group Switch messages (e.g. an IGMP Group Switch message having a field for designating the number of discontinued multicast groups) is that for any given maximum number of newly requested multicast groups designated in the 'Join Quantity' field 404 (or discontinued multicast groups designated in a 'Leave Quantity' field), fewer bits are required to carry such an IGMP Group Switch message. An advantage of few bits being required is that IGMP Group Switch messages with large numbers of newly requested multicast groups (or discontinued multicast groups) may be prepared as compared to IGMP Group Switch messages having both a 'Leave Quantity' field and a 'Join Quantity' field (e.g. the IGMP Group Switch message 300 depicted in FIG. 3).

It should be understood that the IGMP Group Switch messages depicted in Figs. 2, 3 and 4 depict various embodiments of IGMP Group Switch messages for supporting the facilitation of 'Group Switching' functionality in accordance with the disclosures made herein. It is contemplated herein that other embodiments of IGMP Group switching messages will be envisioned by those skilled in the art in view of the disclosures made herein. For example, in view of the disclosures made herein, IGMP Group Switch messages may be contemplated in which the various fields appear in a different order than the order shown. Additionally, embodiments can be contemplated in which the size of the message fields may be different than the sizes shown. Additionally, embodiments can be contemplated in which ranges of group addresses may be specified instead of explicit group addresses.

Referring now to data processor programs in accordance with an embodiment of the disclosures made herein, a data processor program controls at least a portion of the operations associated with facilitating a multicast group switch via a single Internet Group Management Protocol message. In this manner, the data processor program controls at least a portion of the operations necessary to prepare an IGMP Group Switch message in a manner consistent with the disclosures made herein. The term data processor program is defined herein to refer to computer software, data processor algorithms or any other type of instruction code capable of controlling operations associated with a data processor. A microprocessor, microcontroller, microcomputer, digital signal processor, state machine, logic circuitry, and/or any device that manipulates digital information based on operational instruction, or in a predefined manner are examples of a data processor. A network element (e.g. a requesting system or a multicast-capable system) may comprise such a data processor and a data processor program in accordance with embodiments of the disclosures made herein.

A data processor program in accordance with an embodiment of the disclosures made herein is processible by a data processor of a network element (e.g. a requesting system, a multicast-capable system, etc.) in accordance with the disclosures made herein. In one embodiment, the data processor program is resident on the requesting system and accessible from memory (e.g. RAM, ROM, virtual memory, etc) of the requesting system. In another embodiment, the data processor program is resident on and accessible from a peripheral data storage apparatus such as a diskette, a compact disc, an external data storage device or the like. It is contemplated herein that the data processor program may be initially accessed via the data storage apparatus and thereafter accessed via memory of an associated system.

A data processor program accessible from memory and/or a data storage apparatus and processible by a data processor is defined herein as a data processor program product. It is contemplated herein that the data processor program product may comprise more than one data processor programs each accessible from respective apparatuses. It is further contemplated herein that each one of a plurality of data processor programs may be accessed and processed by different respective ones of a plurality of data processors. For example, a data processor of a multicast-capable system and a data processor of a requesting system access a first data processor program and a second data processor program, respectively, from memory of the multicast-capable system and from memory of the requesting system, respectively.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical, mechanical, chemical and electrical changes may be made without departing from the spirit or scope of the invention. For example, functional blocks shown in the figures could be further combined or divided in any manner without departing from the spirit or scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A method for facilitating a multicast group switch, comprising:
receiving multicast information associated with a first multicast group;
receiving a request for receiving multicast information associated with a second multicast group;
preparing an Internet Group Management Protocol (IGMP) Group Switch message in response to receiving the request, wherein the IGMP Group Switch message designates an identity of the first multicast group and an identity of the second multicast group; and
transmitting the IGMP Group Switch message for reception by a multicast-capable system.

2. The method of claim 1 wherein a requesting system performs operations for:
receiving said multicast information associated with a first multicast group;
receiving the request for receiving multicast information associated with a second multicast group;
preparing the IGMP Group Switch message; and
transmitting the IGMP Group Switch message.

3. The method of claim 1 wherein:
receiving the multicast information associated with the first multicast group includes receiving the identity of the first multicast group; and
preparing the IGMP Group Switch message includes extracting the identity of the first multicast group from said multicast information associated with the first multicast group.

4. The method of claim 1, further comprising:
storing an identity of the first multicast group in response to requesting reception of said multicast information associated with the first multicast group; and
wherein preparing the IGMP Group Switch message includes retrieving the identity of the first multicast group after receiving the request for receiving said multicast information associated with the first multicast group.

5. The method of claim 1 wherein preparing the IGMP group switch message includes:
designating a group switch indicator in a message type field of the IGMP Group Switch message;
designating a first multicast group identifier in a first multicast group identifier field of the IGMP Group Switch message; and
designating a second multicast group identifier in a second multicast group identifier field of the IGMP Group Switch message.

6. The method of claim 1, further comprising:
facilitating discontinuation of transmitting said multicast information associated with the first multicast group after receiving the IGMP Group Switch message; and
facilitating transmission of said multicast information associated with the second multicast group for reception by a requesting system,
wherein facilitating transmission is initiated after receiving the IGMP Group Switch message.

7. The method of claim 6 wherein:
facilitating discontinuation of transmitting said multicast information associated with the first multicast group includes identifying a first multicast group identifier designated in a first multicast group identifier field of the IGMP Group Switch message; and
facilitating transmission of said multicast information associated with the second multicast group includes identifying a second multicast group identifier designated in a second multicast group identifier field of the IGMP Group Switch message.

8. A method for facilitating a multicast group switch, comprising:
receiving a request from a requesting system for receiving multicast information associated with at least one newly requested multicast group;
determining at least one discontinued multicast group from which to remove the requesting system in response to receiving the request;
preparing an Internet Group Management Protocol (IGMP) Group Switch message in response to receiving the request, wherein the IGMP Group Switch message designates at least one of a join quantity corresponding to said at least one newly requested multicast group and a leave quantity corresponding to said at least one discontinued multicast group, designates an identity of each said at least one newly requested multicast group and designates an identity of each said at least one discontinued multicast group; and
transmitting the IGMP Group Switch message for reception by a multicast-capable system.

9. The method of claim 8 wherein determining said at least one discontinued multicast group includes determining a data transmission rate of at least one of each of said at least one newly requested multicast group and each of said at least one discontinued multicast group.

10. The method of claim 8 wherein determining said at least one discontinued multicast group includes identifying an identifier associated with each of said at least one discontinued multicast group designated within the request for receiving multicast information associated with at least one newly requested multicast.

11. The method of claim 8 wherein preparing the IGMP Group Switch message includes designating said at least one of the join quantity corresponding to said at least one newly requested multicast group and the leave quantity corresponding to said at least one discontinued multicast group in a corresponding one of a join quantity field and a leave quantity field.

12. The method of claim 8 wherein preparing the IGMP group switch message includes:
designating a group switch indicator in a message type field of the IGMP Group Switch message;
designating said at least one of a join quantity corresponding to said at least one newly requested multicast group and a leave quantity corresponding to said at least one discontinued multicast group in a corresponding one of a join quantity field and a leave quantity field.
designating an identifier associated with each said at least one newly requested multicast group in a respective newly requested multicast group identifier; and
designating an identifier associated with each said at least one discontinued multicast group in a respective discontinued multicast group designation.

13. The method of claim 8, further comprising:
receiving the IGMP group membership message after transmitting the IGMP Group membership message,
wherein a first one of the join quantity and the leave quantity is designated in the IGMP Group Switch message; and
inferring a second one of the join quantity and the leave quantity in response to receiving the IGMP group membership message.

14. The method of claim 13 wherein inferring the second one of the join quantity and the leave quantity includes:
determining a total message length of the IGMP group switch message; and
calculating the second one of the join quantity and the leave quantity based the total message length and the first one of the join quantity and leave quantity designated in the IGMP Group Switch message.

15. The method of claim 8, further comprising:
facilitating discontinuation of transmitting said multicast information associated with each said at least one discontinued multicast group after receiving the IGMP Group Switch message; and
facilitating transmission of said multicast information associated with each said at least one newly requested multicast group for reception by a requesting system, wherein facilitating transmission is initiated after receiving the IGMP Group Switch message.

16. The method of claim 15 wherein:
facilitating discontinuation of transmitting said multicast information associated with each said at least one discontinued multicast group includes identifying an identifier associated with each said at least one discontinued multicast group, wherein the identifier associated with each said at least one discontinued multicast group is designated in a respective discontinued multicast group identifier field of the IGMP Group Switch message; and
facilitating transmission of said multicast information associated with each said at least one newly requested multicast group includes identifying an identifier associated with each said at least one newly requested multicast group, wherein the identifier associated with each said at least one newly requested multicast group is designated in a respective newly requested multicast group identifier field of the IGMP Group Switch message.

17. A data processor program product for facilitating a multicast group switch, comprising:
a data processor program processable by a data processor;
an apparatus from which the data processor program is accessible by the data processor; and
the data processor program being capable of enabling the data processor to facilitate:
receiving multicast information associated with a first multicast group;
receiving a request for receiving multicast information associated with a second multicast group;
preparing an Internet Group Management Protocol (IGMP) Group Switch message in response to receiving the request,
wherein the IGMP Group Switch message designates an identity of the first multicast group and an identity of the second multicast group; and
transmitting the IGMP Group Switch message for reception by a multicast-capable system.

18. The data processor program product of claim 17 wherein:
enabling the data processor to facilitate receiving the multicast information associated with the first multicast group includes enabling the data processor to facilitate receiving the identity of the first multicast group; and
enabling the data processor to facilitate preparing the IGMP Group Switch message includes enabling the data processor to facilitate extracting the identity of the first multicast group from said multicast information associated with the first multicast group.

19. The data processor program product of claim 17 wherein the data processor program is further capable of enabling the data processor to facilitate:
storing an identity of the first multicast group in response to requesting reception of said multicast information associated with the first multicast group; and
wherein preparing the IGMP Group Switch message includes retrieving the identity of the first multicast group after receiving the request for receiving said multicast information associated with the first multicast group.

20. The data processor program product of claim 17 wherein enabling the data processor to facilitate preparing the IGMP group switch message includes enabling the data processor to facilitate:
designating a group switch indicator in a message type field of the IGMP Group Switch message;
designating a first multicast group identifier in a first multicast group identifier field of the IGMP Group Switch message; and
designating a second multicast group identifier in a second multicast group identifier field of the IGMP Group Switch message.

21. The data processor program product of claim 17 wherein the data processor program is further capable of enabling the data processor to facilitate:
facilitating discontinuation of transmitting said multicast information associated with the first multicast group after receiving the IGMP Group Switch message; and
facilitating transmission of said multicast information associated with the second multicast group for reception by a requesting system,
wherein facilitating transmission is initiated after receiving the IGMP Group Switch message.

22. The data processor program product of claim 21 wherein:
enabling the data processor to facilitate facilitating discontinuation of transmitting said multicast information associated with the first multicast group includes enabling the data processor to facilitate identifying a first multicast group identifier designated in a first multicast group identifier field of the IGMP Group Switch message; and
enabling the data processor to facilitate facilitating transmission of said multicast information associated with the second multicast group includes enabling the data processor to facilitate identifying a second multicast group identifier designated in a second multicast group identifier field of the IGMP Group Switch message.

23. A data processor program product for facilitating a multicast group switch, comprising:
a data processor program processable by a data processor;
an apparatus from which the data processor program is accessible by the data processor; and
the data processor program being capable of enabling the data processor to facilitate:
receiving a request from a requesting system for receiving multicast information associated with at least one newly requested multicast group;
determining at least one discontinued multicast group from which to remove the requesting system in response to receiving the request;
preparing an Internet Group Management Protocol (IGMP) Group Switch message in response to receiving the request,
wherein the IGMP Group Switch message designates at least one of a join quantity corresponding to said at least one newly requested multicast group and a leave quantity corresponding to said at least one discontinued multicast group, designates an identity of each said at least one newly requested multicast group and designates an identity of each said at least one discontinued multicast group; and
transmitting the IGMP Group Switch message for reception by a multicast-capable system.

24. The data processor program product of claim 23 wherein enabling the data processor to facilitate determining said at least one discontinued multicast group includes enabling the data processor to facilitate determining a data transmission rate of at least one of each of said at least one newly requested multicast group and each of said at least one discontinued multicast group.

25. The data processor program product of claim 23 wherein enabling the data processor to facilitate determining said at least one discontinued multicast group includes enabling the data processor to facilitate identifying an identifier associated with each of said at least one discontinued multicast group designated within the request for receiving multicast information associated with at least one newly requested multicast.

26. The data processor program product of claim 23 wherein enabling the data processor to facilitate preparing the IGMP Group Switch message includes enabling the data processor to facilitate designating said at least one of the join quantity corresponding to said at least one newly requested multicast group and the leave quantity corresponding to said at least one discontinued multicast group in a corresponding one of a join quantity field and a leave quantity field.

27. The data processor program product of claim 23 wherein enabling the data processor to facilitate preparing the IGMP group switch message includes enabling the data processor to facilitate:
designating a group switch indicator in a message type field of the IGMP Group Switch message;
designating said at least one of a join quantity corresponding to said at least one newly requested multicast group and a leave quantity corresponding to said at least one discontinued multicast group in a corresponding one of a join quantity field and a leave quantity field.
designating an identifier associated with each said at least one newly requested multicast group in a respective newly requested multicast group identifier; and
designating an identifier associated with each said at least one discontinued multicast group in a respective discontinued multicast group designation.

28. The data processor program product of claim 23 wherein the data processor program is further capable of enabling the data processor to facilitate:
receiving the IGMP group membership message after transmitting the IGMP Group membership message,
wherein a first one of the join quantity and the leave quantity is designated in the IGMP Group Switch message; and
inferring a second one of the join quantity and the leave quantity in response to receiving the IGMP group membership message.

29. The data processor program product of claim 28 wherein enabling the data processor to facilitate inferring the second one of the join quantity and the leave quantity includes enabling the data processor to facilitate:
determining a total message length of the IGMP group switch message; and
calculating the second one of the join quantity and the leave quantity based the total message length and the first one of the join quantity and leave quantity designated in the IGMP Group Switch message.

30. The data processor program product of claim 23 wherein the data processor program is further capable of enabling the data processor to facilitate:
facilitating discontinuation of transmitting said multicast information associated with each said at least one discontinued multicast group after receiving the IGMP Group Switch message; and
facilitating transmission of said multicast information associated with each said at least one newly requested multicast group for reception by a requesting system, wherein facilitating transmission is initiated after receiving the IGMP Group Switch message.

31. The data processor program product of claim 30 wherein:
enabling the data processor to facilitate facilitating discontinuation of transmitting said multicast information associated with each said at least one discontinued multicast group includes enabling the data processor to facilitate identifying an identifier associated with each said at least one discontinued multicast group, wherein the identifier associated with each said at least one discontinued multicast group is designated in a respective discontinued multicast group identifier field of the IGMP Group Switch message; and
enabling the data processor to facilitate facilitating transmission of said multicast information associated with each said at least one newly requested multicast group includes enabling the data processor to facilitate identifying an identifier associated with each said at least one newly requested multicast group, wherein the identifier associated with each said at least one newly requested multicast group is designated in a respective newly requested multicast group identifier field of the IGMP Group Switch message.

32. A network element, comprising:
a requesting system including a data processor; and
a data processor program accessible by the data processor of the requesting system;
the data processor program being capable of enabling the data processor of the requesting system to facilitate:
receiving multicast information associated with a first multicast group;
receiving a request for receiving multicast information associated with a second multicast group;
preparing an Internet Group Management Protocol (IGMP) Group Switch message in response to receiving the request,
wherein the IGMP Group Switch message designates an identity of the first multicast group and an identity of the second multicast group; and
transmitting the IGMP Group Switch message for reception by a multicast-capable system.

33. The network element of claim 32 wherein:
enabling the data processor to facilitate receiving the multicast information associated with the first multicast group includes enabling the data processor to facilitate receiving the identity of the first multicast group; and
enabling the data processor to facilitate preparing the IGMP Group Switch message includes enabling the data processor to facilitate extracting the identity of the first multicast group from said multicast information associated with the first multicast group.

34. The network element of claim 32 wherein the data processor program is further capable of enabling the data processor to facilitate:
storing an identity of the first multicast group in response to requesting reception of said multicast information associated with the first multicast group; and
wherein preparing the IGMP Group Switch message includes retrieving the identity of the first multicast group after receiving the request for receiving said multicast information associated with the first multicast group.

35. The network element of claim 32 wherein enabling the data processor to facilitate preparing the IGMP group switch message includes enabling the data processor to facilitate:
designating a group switch indicator in a message type field of the IGMP Group Switch message;
designating a first multicast group identifier in a first multicast group identifier field of the IGMP Group Switch message; and
designating a second multicast group identifier in a second multicast group identifier field of the IGMP Group Switch message.

36. A network element, comprising:
a requesting system including a data processor; and
a data processor program accessible by the data processor of the requesting system;
the data processor program being capable of enabling the data processor of the requesting system to facilitate:
receiving a request from a requesting system for receiving multicast information associated with at least one newly requested multicast group;
determining at least one discontinued multicast group from which to remove the requesting system in response to receiving the request;
preparing an Internet Group Management Protocol (IGMP) Group Switch message in response to receiving the request,
wherein the IGMP Group Switch message designates at least one of a join quantity corresponding to said at least one newly requested multicast group and a leave quantity corresponding to said at least one discontinued multicast group, designates an identity of each said at least one newly requested multicast group and designates an identity of each said at least one discontinued multicast group; and
transmitting the IGMP Group Switch message for reception by a multicast-capable system.

37. The network element of claim 36 wherein enabling the data processor to facilitate determining said at least one discontinued multicast group includes enabling the data processor to facilitate determining a data transmission rate of at least one of each of said at least one newly requested multicast group and each of said at least one discontinued multicast group.

38. The network element of claim 36 wherein enabling the data processor to facilitate determining said at least one discontinued multicast group includes enabling the data processor to facilitate identifying an identifier associated with each of said at least one discontinued multicast group designated within the request for receiving multicast information associated with at least one newly requested multicast.

39. The network element of claim 36 wherein enabling the data processor to facilitate preparing the IGMP Group Switch message includes enabling the data processor to facilitate designating said at least one of the join quantity corresponding to said at least one newly requested multicast group and the leave quantity corresponding to said at least one discontinued multicast group in a corresponding one of a join quantity field and a leave quantity field.

40. The network element of claim 36 wherein enabling the data processor to facilitate preparing the IGMP group switch message includes enabling the data processor to facilitate:
designating a group switch indicator in a message type field of the IGMP Group Switch message;
designating said at least one of a join quantity corresponding to said at least one newly requested multicast group and a leave quantity corresponding to said at least one discontinued multicast group in a corresponding one of a join quantity field and a leave quantity field.
designating an identifier associated with each said at least one newly requested multicast group in a respective newly requested multicast group identifier; and
designating an identifier associated with each said at least one discontinued multicast group in a respective discontinued multicast group designation.

41. The network element of claim 36 wherein the data processor program is further capable of enabling the data processor to facilitate:
receiving the IGMP group membership message after transmitting the IGMP Group membership message,
wherein a first one of the join quantity and the leave quantity is designated in the IGMP Group Switch message; and
inferring a second one of the join quantity and the leave quantity in response to receiving the IGMP group membership message.

42. The network element of claim 41 wherein enabling the data processor to facilitate inferring the second one of the join quantity and the leave quantity includes enabling the data processor to facilitate:
determining a total message length of the IGMP group switch message; and
calculating the second one of the join quantity and the leave quantity based the total message length and the first one of the join quantity and leave quantity designated in the IGMP Group Switch message.
